Europäisches Patentamt

European Patent Office

Office européen des brevets

(19)

(11) **EP 1 020 068 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **98956792.0**

(22) Anmeldetag: **22.09.1998**

(51) Int Cl.$^7$: **H04M 9/08**

(86) Internationale Anmeldenummer:
**PCT/DE98/02825**

(87) Internationale Veröffentlichungsnummer:
**WO 99/017526 (08.04.1999 Gazette 1999/14)**

(54) **ECHOKOMPENSATIONSVERFAHREN, ECHOKOMPENSATIONSVORRICHTUNG UND TELEKOMMUNIKATIONSGERÄT**

ECHO COMPENSATION METHOD, ECHO COMPENSATION DEVICE AND TELECOMMUNICATION DEVICE

PROCEDE DE COMPENSATION D'ECHO, DISPOSITIF DE COMPENSATION D'ECHO ET APPAREIL DE TELECOMMUNICATION

(84) Benannte Vertragsstaaten:
**DE ES FR GB IT NL**

(30) Priorität: **30.09.1997 DE 19743192**

(43) Veröffentlichungstag der Anmeldung:
**19.07.2000 Patentblatt 2000/29**

(73) Patentinhaber: **SIEMENS AKTIENGESELLSCHAFT**
**80333 München (DE)**

(72) Erfinder: **PFLAUM, Karl-Heinz**
**D-46397 Bocholt (DE)**

(56) Entgegenhaltungen:
**EP-A- 0 642 230        WO-A-86/03912**
**US-A- 5 680 450**

**Beschreibung**

Die Erfindung betrifft ein Echokompensationsverfahren nach dem Oberbegriff des Anspruchs 1, eine Echokompensationsvorrichtung nach dem Oberbegriff des Anspruchs 2 und ein Telekommunikationsgerät nach Anspruch 14. Die Erfindung ist für alle Arten von Telekommunikationsgeräten einsetzbar, bei denen eine unerwünschte Signalübertragung zwischen einem Ausgangs- und einem Eingangssignal auftreten kann, insbesondere für Telefone mit Freisprecheinrichtungen.

Ein Echokompensationsverfahren nach dem Oberbegriff des Anspruchs 1 sowie eine Echokompensationsvorrichtung nach dem Oberbegriff des Anspruchs 2 sind aus der WO-A-96/26592 bekannt.

Bei einem mit einer Freisprecheinrichtung ausgestatteten Telefon wird die Stimme des Gesprächspartners ("ferner Sprecher") von einem Lautsprecher mit relativ hohem Pegel übertragen, und die Stimme des Benutzers des Telefons ("naher Sprecher") wird von einem empfindlichen Mikrofon aufgenommen. Der hohe Pegel und die hohe Empfindlichkeit sind erforderlich, um ein Freisprechen in einem großem Umkreis um das Telefon zu ermöglichen.

Zwangsläufig wird beim Betrieb eines derartigen Telefons der von dem Lautsprecher abgestrahlte Schall wieder durch das Mikrofon aufgenommen. Die Übertragungsstrecke vom Lautsprecher zum Mikrofon kann durch die Umgebungsluft oder durch Körperschallübertragung in einem Gehäuse des Telefons gebildet sein. Durch die Schallübertragung nimmt der Gesprächspartner seine eigene Stimme, verzögert um die Signallaufzeit, als störendes Echo wahr. Bei ungünstigen Bedingungen kann es sogar zu einem Rückkopplungspfeifen kommen.

Um diese Effekte zu vermeiden, wird in FIG 3 sowie der zugehörigen Beschreibung der EP 0 204 718 B1 ein Telefon mit einer Schaltung zur Echounterdrükkung vorgeschlagen, bei der ein linearer, adaptiver Filter die Eigenschaften der Übertragungsstrecke von einem Lautsprecher zu einem Mikrofon nachbildet. Der Filter erzeugt aus einem vom Lautsprecher abgestrahlten Ausgabesignal des Telefons ein gefiltertes Kompensationssignal. Ein Subtrahierer ist vorgesehen, um das Kompensationssignal von einem durch ein Mikrofon aufgenommenen Eingangssignal abzuziehen und so ein Ergebnissignal zu erzeugen. Das Ergebnissignal wird an einen Adaptionseingang des adaptiven Filters zurückgekoppelt.

Im theoretischen Idealfall wird durch diese Schaltung die Schleifenverstärkung der Übertragungsstrecke auf Null herabgesetzt. In der Praxis läßt sich dieses Ergebnis aber bei weitem nicht erreichen, weil der adaptive Filter nur lineare Übertragungeigenschaften (einschließlich Verzögerungen) nachbildet. Nichtlineare Verzerrungen der Übertragungsstrecke werden nicht kompensiert. Solche nichtlineare Verzerrungen werden insbesondere durch den Freisprechlautsprecher hervorgerufen. Sie sind um so größer, je näher dieser Lautsprecher an seiner Belastungsgrenze betrieben wird. Insbesondere Lautsprecher mit sehr kleiner Bauform, wie sie beispielsweise bei kompakten Mobiltelefonen eingesetzt werden, erzeugen einen hohen Anteil nichtlinearer Verzerrungen.

Um auch nichtlineare Verzerrungen zu kompensieren, ist in der gattungsbildenden FIG 5 sowie der zugehörigen Beschreibung der EP 0 204 718 B1 eine Echokompensationsschaltung vorgeschlagen, die auf der oben erläuterten Schaltung basiert. Das Ausgangssignal wird hier jedoch nicht unmittelbar, sondern über eine nichtlineare Anpaßschaltung dem adaptiven Filter zugeführt. Die nichtlineare Anpaßschaltung weist eine feste Übertragungsfunktion auf, um auch nichtlineare Eigenschaften der Übertragungsstrecke nachzubilden.

Auch diese bekannte Schaltung vermag jedoch starke nichtlineare Verzerrungen nicht hinreichend zu kompensieren. Sie muß überdies in aufwendiger Weise an die jeweiligen Eigenschaften der Übertragungsstrecke, insbesondere den verwendeten Lautsprecher, angepaßt werden.

Demgegenüber offenbart die WO-A-96/26592 bereits ein Echkompensationsverfahren sowie eine Echokompensationsvorrichtung, bei der der Weg gegangen wird, die nicht linearen Anteile der Übertragungsstrecke adaptiv zu modellieren. Zu diesem Zweck wird jedoch vorgeschlagen, mittels zusätzlicher Sensoren, Messwerte für die adaptive Anpassung von Modellparametern zu erfassen.

Die Erfindung hat demgemäß die Aufgabe, die genannten Probleme zu lösen und eine Möglichkeit zur Echokompensation bereitzustellen, die auch bei starken nichtlinearen Verzerrungen wirksam und flexibel arbeitet und nur geringen oder keinen Einstellaufwand benötigt.

Erfindungsgemäß wird diese Aufgabe durch ein Echokompensationsverfahren mit den Merkmalen des Anspruchs 1, eine Echokompensationsvorrichtung mit den Merkmalen des Anspruchs 2 und ein Telekommunikationsgerät mit den Merkmalen des Anspruchs 14 gelöst.

Die Erfindung geht von der Grundidee aus, das nichtlineare Modul ebenfalls als adaptives Modul auszugestalten, um eine Adaption der Eigenschaften des nichtlinearen Moduls in Abhängigkeit von dem Ergebnissignal durchführen zu können. Dadurch kann die Qualität der Kompensation nichtlinearer Verzerrungen verbessert werden. Wegen der Adaptionsfähigkeit des nichtlinearen Moduls ist ein genauer Abgleich nicht erforderlich.

Im hier verwendeten Sinne soll als Signal insbesondere jedes analoge oder digitale Signal oder Signalbündel sowie jedes sich zeitlich ändernde Datenwort verstanden werden. Insbesondere umfaßt der Begriff alle Arten digitaler Signale, auch wenn sie mehrere Teilsignale aufweisen, die auf je einer Leitung eines parallelen Datenübertragungsweges übertragen werden.

Ferner umfaßt der Begriff Daten oder Datenströme in einer digitalen Schaltung wie einem digitalen Signalprozessor.

Die Bezeichnung von Signalen als Eingangs- und Ausgangssignale soll im hier verwendeten Sinne wahlweise im Hinblick auf einen Benutzer oder im Hinblick auf ein Netzwerk verstanden werden. Eine Übertragungsstrecke von einem an das Netzwerk gerichteten Ausgangssignal zu einem vom Netzwerk stammenden Eingangssignal kann beispielsweise durch eine Fehlanpassung in einem Hybrid oder durch Komponenten des Netzwerkes gebildet sein. Auch die in diesem Fall entstehenden Echos können durch die Erfindung kompensiert werden, wobei aber typischerweise bei Hybrid-Echos nur geringe nichtlineare Verzerrungen auftreten. Wenn diese Echos zusätzlich zu den Echos kompensiert werden sollen, die durch die Übertragungsstrecke vom Lautsprecher zum Mikrofon hervorgerufen werden, muß die gesamte Anordnung zweimal vorhanden sein.

Bei der erfindungsgemäßen Vorrichtung ist das nichtlineare Modul zum Nachbilden von nichtlinearen Verzerrungen der Übertragungsstrecke eingerichtet. Dies schließt bevorzugte Ausführungsformen ein, in denen die Nachbildung indirekt erfolgt, zum Beispiel durch Einstellen geeigneter Parameter eines Filters oder einer Kennlinie, um deren Eigenschaften zu beeinflussen.

Bevorzugt weist die Kompensationssignaleinrichtung einen adaptiven Filter auf, der ein erstes Kompensationssignal erzeugt. Wenn das erste Kompensationssignal eine vollständige oder teilweise Modellierung des Echosignals darstellt, wird das Kompensationssignal vorzugsweise von dem Eingangssignal des Telekommunikationsgerätes abgezogen. Ferner wird in bevorzugten Ausführungsformen ein zweites Kompensationssignal erzeugt, das nichtlineare Eigenschaften der Übertragungsstrecke ausgleicht. Auch das zweite Kompensationssignal wird vorzugsweise von dem Eingangssignal abgezogen.

Der adaptive Filter ist in bevorzugten Ausführungsformen ein linearer Filter. Er kann jedoch zusätzlich nichtlineare Komponenten aufweisen. Er erhält vorzugsweise das echokompensierte Ergebnissignal und/ oder ein Zwischensignal, um den Adaptionsvorgang zu steuern und somit die Echokompensation zu optimieren.

Das nichtlineare Modul verarbeitet vorzugsweise das Ausgangssignal des Telekommunikationsgerätes und/oder das erste Kompensationssignal des adaptiven Filters. Als Eingangssignal für den adaptiven Filter dient vorzugsweise das Ausgangssignal des Telekommunikationsgerätes oder ein daraus abgeleitetes Signal, das insbesondere schon hinsichtlich der nichtlinearen Übertragungsanteile kompensiert sein kann.

Da der Adaptionsvorgang vorzugsweise nur in bestimmten Gesprächs- oder Übertragungssituationen ablaufen soll, ist in bevorzugten Ausführungsformen eine Steuerung vorgesehen, um diesen Vorgang zu aktivieren und zu deaktivieren. Die Steuerung bestimmt diese Situationen bevorzugt durch einen Vergleich der Signalpegel des Eingangs- und des Ausgangssignals miteinander und/oder mit Schwellwerten.

Bevorzugt ist die Echokompensationsvorrichtung mittels eines digitalen Signalprozessors aufgebaut.

In bevorzugten Ausführungsformen des erfindungsgemäßen Verfahrens weist dieses sinngemäß die Merkmale der Ansprüche 2 bis 13 und/oder die oben genannten Merkmale auf.

Mehrere Ausführungsbeispiele der Erfindung werden im folgenden unter Hinweis auf die schematischen Zeichnungen genauer beschrieben. Es stellen dar:

FIG 1 bis FIG 5 je ein Blockschaltbild eines Telekommunikationsgerätes in je einem Ausführungsbeispiel der Erfindung, und

FIG 6 ein Blockschaltbild eines nichtlinearen Moduls.

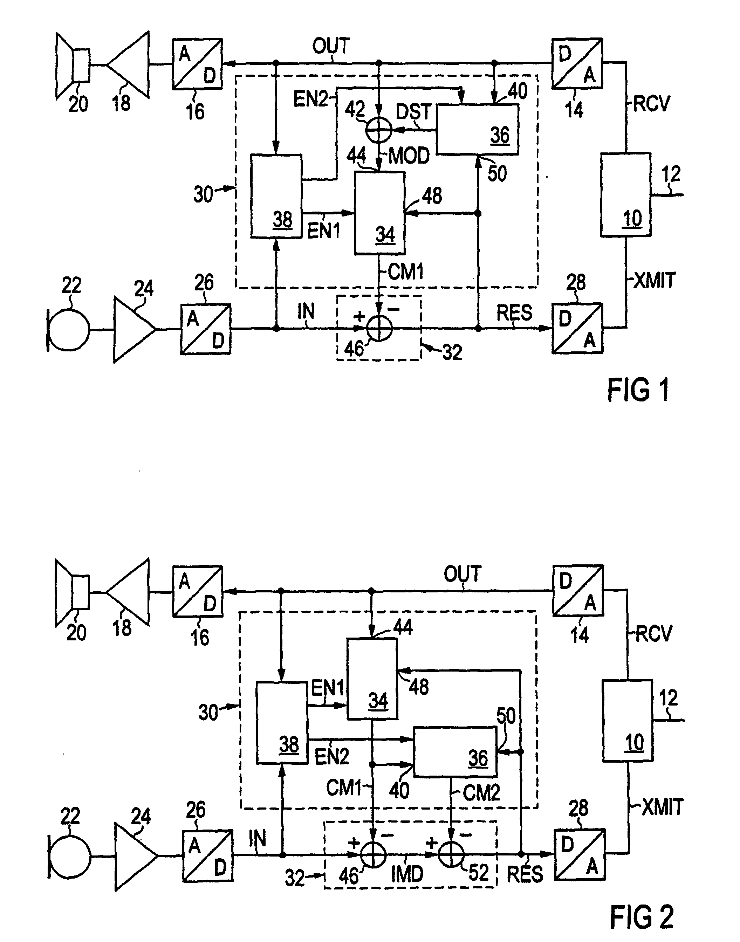

Das in FIG 1 bis FIG 5 gezeigte Telekommunikationsgerät ist ein mit einer Freisprecheinrichtung ausgestattetes, analoges Telefon. Ein Hybrid 10 ist mit einer Duplexleitung 12, beispielsweise einer Amtsleitung, verbunden. Das Hybrid 10 teilt in an sich bekannter Weise hin- und rücklaufende Signalkomponenten in ein Empfangssignal RCV und ein Übertragungssignal XMIT auf.

Ein erster Analog/Digital-Wandler 14 erzeugt aus dem Empfangssignal RCV ein digitales Ausgangssignal OUT des Telefons. Das Ausgangssignal OUT wird von einem ersten Digital/Analog-Wandler 16 in ein analoges Signal umgewandelt, das seinerseits von einem Ausgangsverstärker 18 verstärkt und einem Lautsprecher 20 zugeleitet wird.

Ein Mikrofon 22 ist über einen Eingangsverstärker 24 mit einem zweiten Analog/Digital-Wandler 26 verbunden, der seinerseits ein digitales Eingangssignal IN des Telefons erzeugt. Ein zweiter Digital/Analog-Wandler 28 ist vorgesehen, um ein von dem Eingangssignal IN durch Echokompensation abgeleitetes Ergebnissignal RES in das Übertragungssignal XMIT des Telefons umzuwandeln. In Ausführungsalternativen ist das Telefon als digitales Telefon ausgestaltet. Der Hybrid 10, der erste Analog/Digital-Wandler 14 und der zweite Digital/Analog-Wandler 28 können dann entfallen.

Zur Echounterdrückung weist das Telefon eine Echokompensationsvorrichtung auf, die als ein digitaler Signalprozessor (DSP) ausgestaltet ist. Die im folgenden beschriebenen Komponenten der Echokompensationsvorrichtung sind durch ein Steuerprogramm des Signalprozessors implementiert. Die in dieser Beschreibung genannten hardwarenahen Begriffe sind daher le-

diglich als anschauliche Betrachtungsweise der Prozesse des Steuerprogramms aufzufassen. In Ausführungsalternativen ist die Echokompensationsvorrichtung mittels einer dedizierten Hardwareschaltung aufgebaut. Falls eine solche analoge Hardwareschaltung in ein analoges Telefon eingebaut ist, entfallen die Analog/Digital-Wandler 14 und 26 sowie die Digital/Analog-Wandler 16 und 28.

Die Echokompensationsvorrichtung ist aus einer Kompensationssignaleinrichtung 30 und einer Ausgleichseinrichtung 32 gebildet. Die Kompensationssignaleinrichtung 30 weist in allen hier beschriebenen Ausführungsbeispielen einen adaptiven Filter 34, ein nichtlineares Modul 36 und eine Steuerung 38 auf. Die Steuerung 38 erhält das Ausgangssignal OUT und das Eingangssignal IN und gibt je ein Freigabesignal EN1 und EN2 an den adaptiven Filter 34 und das nichtlineare Modul 36 aus, um den Adaptionsbetrieb freizugeben oder zu sperren.

Bei dem in FIG 1 gezeigten Ausführungsbeispiel ist das Ausgangssignal OUT an einen Signaleingang 40 des nichtlinearen Moduls 36 angelegt. Das nichtlineare Modul 36 bestimmt aus dem Ausgangssignal OUT ein Verzerrungssignal DST, das an einem Eingang eines Addierers 42 anliegt. Ein weiterer Eingang des Addierers 42 ist mit dem Ausgangssignal OUT verbunden, und ein Ausgang des Addierers 42 liefert ein modifiziertes Signal MOD, das aus dem Ausgangssignal OUT durch Nachbildung der nichtlinearen Verzerrungen des Lautsprechers 20 und des Mikrofons 22 abgeleitet ist.

Das modifizierte Signal MOD liegt an einem Signaleingang 44 des adaptiven Filters 34 an, der daraus ein erstes Kompensationssignal CM1 erzeugt. Der adaptive Filter 34 bildet die linearen Verzerrungen (einschließlich der Signallaufzeit) der Übertragungsstrecke von dem Lautsprecher 20 zum Mikrofon 22 nach. Beispielsweise kann der adaptive Filter 34 eine Reihe von Verzögerungsstufen für das an dem Eingang 44 anliegende Signal aufweisen, wobei die verzögerten Signale mit einstellbaren Gewichtsfaktoren summiert werden und die so erhaltene Summe das erste Kompensationssignal CM1 bildet.

Insgesamt ist daher in diesem Ausführungsbeispiel das erste Kompensationssignal CM1 aus dem Ausgangssignal OUT durch Berücksichtigen aller Übertragungseigenschaften der Übertragungsstrecke abgeleitet.

Das erste Kompensationssignal CM1 liegt an der hier als erster Subtrahierer 46 ausgebildeten Ausgleichseinrichtung 32 an. Der erste Subtrahierer 46 bildet die Differenz zwischen dem Eingangssignal IN und dem ersten Kompensationssignal CM1 und erzeugt das Ergebnissignal RES. Das Ergebnissignal RES liegt an einem Adaptionseingang 48 des adaptiven Filters 34 und an einem Adaptionseingang 50 des nichtlinearen Moduls 36 an. Sowohl der adaptive Filter 34 als auch das nichtlineare Modul 36 können dadurch ihre Signalverarbeitungsparameter an die Eigenschaften der Übertragungsstrecke anpassen.

Das Ziel der Adaption ist es, die Schleifenverstärkung für das Echosignal möglichst weitgehend zu verringern. Während der Benutzer des Telefons in das Mikrofon 22 spricht, überwiegt das Nutzsignal im Regelfall ein vom Lautsprecher 20 stammenden Echosignal. In diesem Zeitraum ist eine Adaption nicht sinnvoll. Die Steuerung 38 erkennt eine solche Übertragungssituation beispielsweise dadurch, daß der Pegel des Eingangssignals IN einen vorgegebenen Schwellwert übersteigt, und sperrt die Adaption des adaptiven Filters 34 und des nichtlinearen Moduls 36 durch geeignetes Setzen der Freigabesignale EN1 und EN2. In Ausführungsalternativen sind andere Verfahren zum Erkennen der Sprechzeiten des nahen Sprechers vorgesehen, die beispielsweise auf einem Vergleich der Pegel des Eingangssignals IN und des Ausgangssignals OUT beruhen können.

Bei einer Gesprächspause, wenn also weder der nahe noch der ferne Sprecher aktiv sind, findet ebenfalls keine Adaption statt, weil in diesem Fall von dem Mikrofon 22 lediglich das Umgebungsgeräusch aufgenommen wird.

Wenn die Steuerung 38 durch einen Pegelvergleich ermittelt, daß nur der ferne Sprecher aktiv ist, wird der Adaptionsbetrieb des adaptiven Filters 34 und des nichtlinearen Moduls 36 mittels der Freigabesignale EN1 und EN2 freigegeben. Da in diesem Fall von dem Mikrofon 22 hauptsächlich der von dem Lautsprecher 20 stammende Schall aufgenommen wird, hat die Adaption zum Ziel, den Pegel des Ergebnissignals RES möglichst weitgehend zu verringern. Eine Reduktion auf Null wird in der Regel nicht möglich sein, weil das Mikrofon 22 auch zufällige Störgeräusche aus der Umgebung aufnimmt.

Die Adaption des adaptiven Filters 34 und des nichtlinearen Moduls 36 erfolgt durch geeignete Variation von Parametern der Übertragungsfunktionen dieser beiden Komponenten. Im einfachsten Fall können einzelne Parameter zufällig ausgewählt und verändert werden, und je nach der erzielten Wirkung wird die Änderung beibehalten oder rückgängig gemacht. In Ausführungsalternativen sind andere Adaptionsverfahren möglich, bei denen Eigenschaften des Ergebnissignals RES analysiert und zur gezielten Veränderung der Parameter herangezogen werden. Ein in weiteren Ausführungsalternativen eingesetztes Adaptionsverfahren ist das LMS-Verfahren ("least mean square"-Verfahren), das in Kapitel 6, Seiten 99 bis 115 des Buches "Adaptive Signal Processing" von B. Widrow und S. D. Stearns, Prentice-Hall 1985 genau beschrieben ist.

Das Ausführungsbeispiel nach FIG 2 basiert auf dem in FIG 1 gezeigten, wobei jedoch am Signaleingang 40 des nichtlinearen Moduls 36 nicht das Ausgangssignal OUT, sondern das erste Kompensationssignal CM1 anliegt. Am Signaleingang 44 des adaptiven Filters 34 liegt das Ausgangssignal OUT unmittelbar an, so daß der Addierer 42 entfällt. Das nichtlineare Modul 36 erzeugt ein zweites Kompensationssignal CM2, das die nichtlinearen Verzerrungen der Übertragungsstrecke modelliert.

In dem Ausführungsbeispiel gemäß FIG 2 weist die Ausgleichseinrichtung 32 neben dem ersten Subtrahierer 46 einen zweiten Subtrahierer 52 auf. Die von dem ersten Subtrahierer 46 berechnete Differenz des Eingangssignals IN und des ersten Kompensationssignals CM1 bildet hier ein Zwischensignal IMD, von dem der zweite Subtrahierer 52 das zweite Kompensationssignal CM2 abzieht, um das Ergebnissignal RES zu erhalten. In Ausführungsalternativen hat die Ausgleichseinrichtung 32 bei gleicher Funktionalität eine andere Struktur. Beispielsweise kann vorgesehen sein, die beiden Kompensationssignale CM1 und CM2 zunächst zu addieren und deren Summe dann von dem Eingangssignal IN zu subtrahieren.

Im Ergebnis modelliert bei dem Ausführungsbeispiel nach FIG 2 das erste Kompensationssignal CM1 die linearen Übertragungseigenschaften der Übertragungsstrecke. Dieser Modellierung werden mittels des zweiten Kompensationssignals CM2 nichtlineare Anteile hinzugefügt. Das Ergebnissignal RES liegt an den Adaptionseingängen 48 und 50 an und liefert Informationen über den Erfolg der Kompensation, um eine genaue Adaption zu ermöglichen.

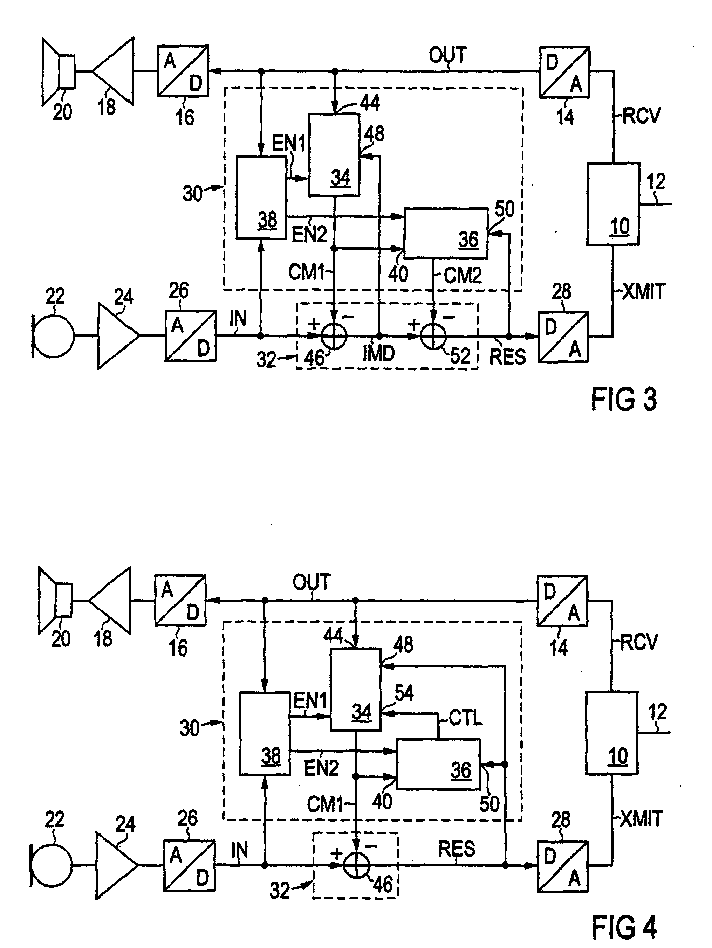

Das Ausführungsbeispiel nach FIG 3 ist gegenüber dem in FIG 2 gezeigten dadurch abgewandelt, daß an dem Adaptionseingang 48 des adaptiven Filters 34 nicht das Ergebnissignal RES, sondern das Zwischensignal IMD anliegt. Die Adaption des nichtlinearen Moduls 36 wird jedoch weiterhin von dem Ergebnissignal RES gesteuert.

Die Anordnung gemäß FIG 3 bietet eine besonders gute Gliederung in einen Funktionsblock für die übliche, lineare Echokompensation und einen Funktionsblock für die Kompensation nichtlinearer Anteile. Wenn bereits eine Implementierung des erstgenannten Funktionsblocks existiert, kann sie problemlos übernommen werden, da der hinzugefügte Block für die nichtlineare Kompensation den Adaptionsvorgang des ursprünglichen Funktionsblocks nicht beeinflußt.

In FIG 4 ist ein weiteres Ausführungsbeispiel gezeigt, das im Vergleich zu dem nach FIG 2 dadurch abgewandelt ist, daß das nichtlineare Modul 36 kein zweites Kompensationssignal CM2, sondern ein Steuersignal CTL generiert. Das Steuersignal CTL wird einem Steuereingang 54 des adaptiven Filters 34 zugeführt und verändert dessen Filtereigenschaften unmittelbar. Der Filter 34 weist in diesem Ausführungsbeispiel einen nichtlinearen Anteil auf. Die nichtlinearen Eigenschaften der Signalübertragungsstrecke werden somit durch das nichtlineare Modul 36 indirekt nachgebildet, indem die Signalübertragungsparameter des adaptiven Filters 34 in geeigneter Weise beeinflußt werden. Die Ausgleichseinrichtung 32 besteht hier nur aus dem ersten Subtrahierer 46, da bei diesem Ausführungsbeispiel nur das erste Kompensationssignal CM1 zu verarbeiten ist.

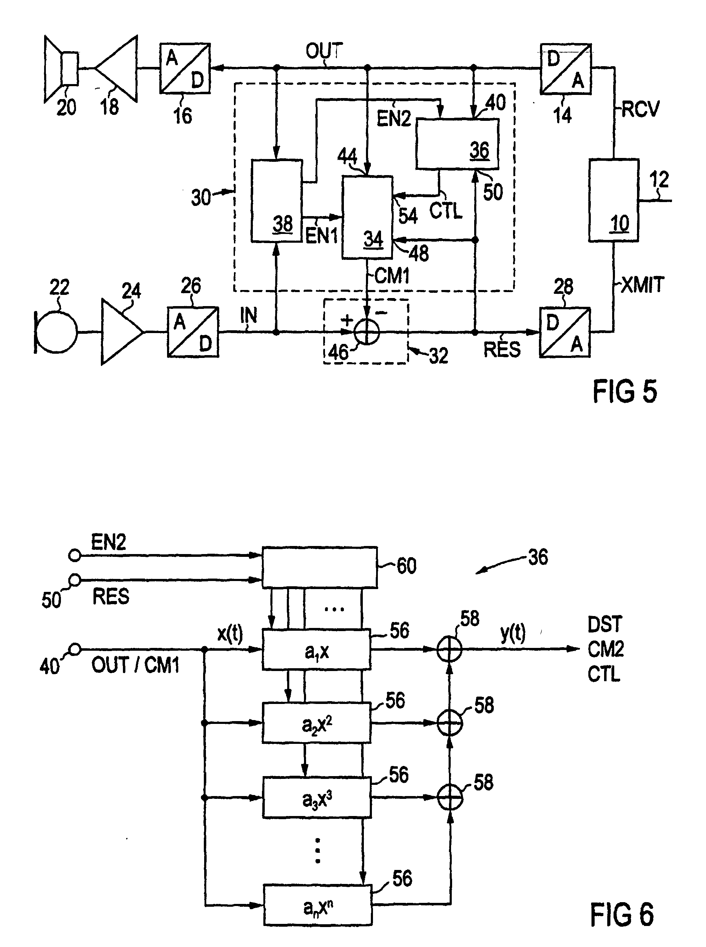

Das Ausführungsbeispiel nach FIG 5 unterscheidet sich von dem in FIG 4 gezeigten dadurch, daß an dem Signaleingang 40 des nichtlinearen Moduls 36 nicht das erste Kompensationssignal CM1, sondern das Ausgabesignal OUT anliegt. Das Steuersignal CTL dient auch bei diesem Ausführungsbeispiel dazu, die Nichtlinearitäten der Übertragungsstrecke durch geeignete Veränderung der Parameter des Filters 34 zu modellieren. Auch in diesem Ausführungsbeispiel weist der Filter 34 einen nichtlinearen Anteil auf.

Bei dem nichtlinearen Modul 36 gemäß dem in FIG 6 gezeigten Ausführungsbeispiel wird eine Kennlinie n-ter Ordnung mit n Parametern realisiert. Beispielsweise kann n = 4 gelten. An dem Signaleingang 40 liegt, je nach der Verwendung des nichtlinearen Moduls 36, das Ausgangssignal OUT oder das erste Kompensationssignal CM1 an. Dieses Signal, das im folgenden mit x(t) bezeichnet wird, wird von n Signalbearbeitungsgliedern 56 mit den Exponenten 1, 2, ..., n potenziert und mit den Koeffizienten $a_1$, $a_2$, ..., $a_n$ multipliziert. Die Ergebnisse werden von einer Reihe von Summierern 58 addiert, woraus sich das Signal y(t) ergibt. Dieses Signal y(t) dient, je nach Anwendung, als Verzerrungssignal DST, als zweites Kompensationssignal CM2 oder als Steuersignal CTL. Insgesamt gilt damit die folgende Beziehung:

$$y(t) = a_1 \cdot x(t) + a_2 \cdot (x(t))^2 + ... + a_n \cdot (x(t))^n$$

Die Koeffizienten $a_1$, $a_2$, ..., $a_n$ der Signalbearbeitungsglieder 56 sind von einer Adaptionseinrichtung 60 veränderbar. Die Adaptionseinrichtung 60 erhält das Freigabesignal EN2 sowie, über den Adaptionseingang 50, das Ergebnissignal RES. Die Adaption erfolgt in Abhängigkeit von dem Ergebnissignal RES beispielsweise nach dem oben bereits geschilderten Verfahren einer zufälligen Veränderung ("trial and error"-Verfahren) oder nach dem LMS-Verfahren.

In Ausführungsalternativen werden andere nichtlineare Übertragungsfunktionen und andere Adaptionsverfahren eingesetzt. Da der Term $a_1 \cdot x(t)$ in der obigen Gleichung der linearen Übertragungsfunktion entspricht, wird in vielen Anwendungsfällen $a_1 = 0$ gewählt werden. Das zugeordnete Signalbearbeitungsglied 56 sowie ein Summierer 58 können dann entfallen.

**Patentansprüche**

1. Echokompensationsverfahren für ein Telekommunikationsgerät, mit den Schritten:

   a) Erzeugen mindestens eines Kompensationssignals (CM1, CM2) in Abhängigkeit von einem Ausgangssignal (OUT) des Telekommunikationsgerätes durch Nachbilden von Übertragungseigenschaften einer übertragungsstrekke, wobei nichtlineare Verzerrungen der Übertragungsstrecke berücksichtigt werden, und

b) Ausgleichen von Echoanteilen in einem Eingangssignal (IN) des Telekommunikationsgerätes in Abhängigkeit von dem mindestens einen Kompensationssignal (CM1, CM2), um ein echokompensiertes Ergebnissignal (RES) zu erhalten, wobei die Berücksichtigung nichtlinearer Verzerrungen der Übertragungsstrecke mittels eines adaptiven Verfahrens erfolgt,

**dadurch gekennzeichnet,**
**dass** die Adaption in diesem Verfahren auf Grundlage des echokompensierten Ergebnissignals (RES) vorgenommen wird.

2. Echokompensationsvorrichtung für ein Telekommunikationsgerät mit

-   einer Kompensationssignaleinrichtung (30), die zur Nachbildung von Übertragungseigenschaften einer Übertragungsstrecke ausgebildet ist, zum Erzeugen mindestens eines Kompensationssignals (CM1, CM2) in Abhängigkeit von einem Ausgangssignal (OUT) des Telekommunikationsgerätes, wobei die Kompensationssignaleinrichtung (30) ein nichtlineares Modul (36) zum Nachbilden von nichtlinearen Verzerrungen der Übertragungsstrecke aufweist, und

-   einer Ausgleichseinrichtung (32) zum Ausgleichen von Echoanteilen in einem Eingangssignal (IN) des Telekommunikationsgerätes in Abhängigkeit von dem mindestens einen Kompensationssignal (CM1, CM2), um ein echokompensiertes Ergebnissignal (RES) zu erhalten,

wobei das nichtlineare Modul (36) als adaptives Modul ausgestaltet ist,
**dadurch gekennzeichnet,**
**dass** das nicht lineare Modul dazu eingerichtet ist, die Adaption auf Grundlage des echokompensierten Ergebnissignals (RES) vorzunehmen.

3. Echokompensationsvorrichtung nach Anspruch 2,
**dadurch gekennzeichnet,**
**dass** die Kompensationssignaleinrichtung (30) einen adaptiven Filter (34) aufweist, der ein erstes Kompensationssignal (CM1) erzeugt.

4. Echokompensationsvorrichtung nach Anspruch 3,
**dadurch gekennzeichnet,**
**dass** die Ausgleichseinrichtung (32) einen ersten Subtrahierer (46) aufweist, der das Eingangssignal (IN) des Telekommunikationsgerätes und das erste Kompensationssignal (CM1) das adaptiven Filters (34) voneinander subtrahiert.

5. Echokompensationsvorrichtung nach Anspruch 3 oder 4,
**dadurch gekennzeichnet,**
**dass** der adaptive Filter (34) dazu eingerichtet ist, die Adaption auf Grundlage des echokompensierten Ergebnissignals (RES) vorzunehmen.

6. Echokompensationsvorrichtung nach Anspruch 4,
**dadurch gekennzeichnet,**
**dass** der adaptive Filter (34) dazu eingerichtet ist, die Adaption auf Grundlage eines von dem ersten Subtrahierer (46) erzeugten Zwischensignals (IMD) vorzunehmen.

7. Echokompensationsvorrichtung nach einem der Ansprüche 3 - 6,
**dadurch gekennzeichnet,**
**dass** das nichtlineare Modul (36) ein zweites Kompensationssignal (CM2) erzeugt und die Ausgleichseinrichtung (32) dazu eingerichtet ist, das Eingangssignal (IN) des Telekommunikationsgerätes einerseits und die beiden Kompensationssignale (CM1, CM2) andererseits voneinander zu subtrahieren.

8. Echokompensationsvorrichtung nach einem der Ansprüche 3 - 5,
**dadurch gekennzeichnet,**
**dass** das Ausgangssignal (OUT) des Telekommunikationsgerätes als Eingangssignal für das nichtlineare Modul (36) dient.

9. Echokompensationsvorrichtung nach Anspruch 8,
**dadurch gekennzeichnet,**
**dass** ein Summierer (42) vorgesehen ist, der aus dem Ausgangssignal (OUT) des Telekommunikationsgerätes und einem Verzerrungssignal (DST) des nichtlinearen Moduls (36) ein modifiziertes Signal (MOD) als Eingangssignal für den adaptiven Filter (34) erzeugt.

10. Echokompensationsvorrichtung nach einem der Ansprüche 3 - 7,
**dadurch gekennzeichnet,**
**dass** das erste Kompensationssignal (CM1) des adaptiven Filters (34) als Eingangssignal für das nichtlineare Modul (36) dient.

11. Echokompensationsvorrichtung nach einem der Ansprüche 3 - 5, 8 oder 10,
**dadurch gekennzeichnet, dass** das nichtlineare Modul (36) ein Steuersignal (CTL) für den adaptiven Filter (34) erzeugt, um die Filtereigenschaften das adaptiven Filters (34) zu beeinflussen.

**12.** Echokompensationsvorrichtung nach einem der Ansprüche 2 - 11, **dadurch gekennzeichnet, dass** eine Steuerung (38) zum Aktivieren und Deaktivieren der Adaptionsfähigkeit des adaptiven Filters (34) und des nichtlinearen Moduls (36) vorgesehen ist, und daß die Steuerung (38) das Ausgangssignal (OUT) und das Eingangssignal (IN) der Telekommunikationseinrichtung verarbeitet.

**13.** Echokompensationsvorrichtung nach einem der Ansprüche 2 - 12, **dadurch gekennzeichnet, dass** die Kompensationssignaleinrichtung (30) und die Ausgleichseinrichtung (32) als Prozesse eines Steuerprogramms eines digitalen Signalprozessors implementiert sind.

**14.** Telekommunikationsgerät mit einer Echokompensationsvorrichtung nach einem der Ansprüche 2 bis 13.

**15.** Telekommunikationsgerät nach Anspruch 14, das als mit einer Freisprecheinrichtung ausgestattetes Telefon ausgebildet ist.

**Claims**

**1.** Echo compensation method for a telecommunications appliance, having the following steps:

a) production of at least one compensation signal (CM1, CM2) as a function of an output signal (OUT) from the telecommunications appliance by modelling transmission characteristics of a transmission path, with non-linear distortion on the transmission path being taken into account, and
b) compensation for echo components in an input signal (IN) to the telecommunications appliance as a function of the at least one compensation signal (CM1, CM2), in order to produce an echo-compensated result signal (RES), with non-linear distortion on the transmission path being taken into account by means of an adaptive method,

**characterized**
**in that** the adaptation in this method is carried out on the basis of the echo-compensated result signal (RES).

**2.** Echo compensation apparatus for a telecommunications appliance having

- a compensation signal device (30) which is designed to model the transmission characteristics of a transmission path, for producing at least one compensation signal (CM1, CM2) as a function of an output signal (OUT) from the telecommunications appliance, with the compensation signal device (30) having a non-linear module (36) for modelling non-linear distortion on the transmission path, and
- a compensating device (32) in order to compensate for echo components in an input signal (IN) to the telecommunications appliance as a function of the at least one compensation signal (CM1, CM2), in order to produce an echo-compensated result signal (RES), with the non-linear module (36) being in the form of an adaptive module,

**characterized**
**in that** the non-linear module is set up to carry out the adaptation on the basis of the echo-compensated result signal (RES).

**3.** Echo compensation apparatus according to Claim 2,
**characterized**
**in that** the compensation signal device (30) has an adaptive filter (34), which produces a first compensation signal (CM1).

**4.** Echo compensation apparatus according to Claim 3,
**characterized**
**in that** the compensating device (32) has a first subtractor (46), which subtracts the input signal (IN) to the telecommunications appliance and the first compensation signal (CM1) of the adaptive filter (34) from one another.

**5.** Echo compensation apparatus according to Claim 3 or 4,
**characterized**
**in that** the adaptive filter (34) is set up to carry out the adaptation on the basis of the echo-compensated result signal (RES).

**6.** Echo compensation apparatus according to Claim 4,
**characterized**
**in that** the adaptive filter (34) is set up to carry out the adaptation on the basis of an intermediate signal (IMD), which is produced by, the first subtractor (46).

**7.** Echo compensation apparatus according to one of Claims 3-6,
**characterized**
**in that** the non-linear module (36) produces a second compensation signal (CM2), and the compensating device (32) is set up to subtract the input signal (IN) to the telecommunications appliance on the one hand and the two compensation signals (CM1, CM2) on the other hand from one another.

8. Echo compensation apparatus according to one of Claims 3-5,
**characterized**
**in that** the output signal (OUT) from the telecommunications appliance is used as the input signal for the non-linear module (36).

9. Echo compensation apparatus according to Claim 8,
**characterized**
**in that** an adder (42) is provided, which uses the output signal (OUT) from the telecommunications appliance and a distortion signal (DST) from the non-linear module (36) to produce a modified signal (MOD) as the input signal for the adaptive filter (34).

10. Echo compensation apparatus according to one of Claims 3-7,
**characterized**
**in that** the first compensation signal (CM1) for the adaptive filter (34) is used as the input signal for the non-linear module (36).

11. Echo compensation apparatus according to one of Claims 3-5, 8 or 10,
**characterized**
**in that** the non-linear module (36) produces a control signal (CTL) for the adaptive filter (34), in order to influence the filter characteristics of the adaptive filter (34).

12. Echo compensation apparatus according to one of Claims 2-11,
**characterized**
**in that** a controller (38) is provided for activation and deactivation of the adaptation capability of the adaptive filter (34) and of the non-linear module (36), and in that the controller (38) processes the output signal (OUT) from and the input signal (IN) to the telecommunications device.

13. Echo compensation apparatus according to one of Claims 2-12,
**characterized**
**in that** the compensation signal device (30) and the compensating device (32) are implemented as processes in a control program in a digital signal processor.

14. Telecommunications appliance having an echo compensation apparatus according to one of Claims 2 to 13.

15. Telecommunications appliance according to Claim 14, which is in the form of a telephone equipped with a hands-free device.

**Revendications**

1. Procédé de compensation d'écho pour un appareil de télécommunication, avec les étapes de :

a) production d'au moins un signal de compensation (CM1, CM2) en fonction d'un signal de sortie (OUT) de l'appareil de télécommunication par reproduction de propriétés de transmission d'une voie de transmission, des distorsions non linéaires de la voie de transmission étant prises en compte, et
b) compensation de composantes d'écho dans un signal d'entrée (IN) de l'appareil de télécommunication en fonction du ou des signaux de compensation (CM1, CM2) pour obtenir un signal résultant (RES) à écho compensé, la prise en compte de distorsions non linéaires de la voie de transmission s'effectuant au moyen d'un procédé adaptatif,

**caractérisé par le fait que**
l'adaptation dans ce procédé est effectuée sur la base du signal résultant (RES) à écho compensé.

2. Dispositif de compensation d'écho pour un appareil de télécommunication, avec

- un dispositif de signal de compensation (30) qui est conçu pour la reproduction de propriétés de transmission d'une voie de transmission, pour la production d'au moins un signal de compensation (CM1, CM2) en fonction d'un signal de sortie (OUT) de l'appareil de télécommunication, le dispositif de signal de compensation (30) comportant un module non linéaire (36) pour la reproduction de distorsions non linéaires de la voie de transmission, et
- un dispositif de compensation (32) pour la compensation de composantes d'écho dans un signal d'entrée (IN) de l'appareil de télécommunication en fonction du ou des signaux de compensation (CM1, CM2) pour obtenir un signal résultant (RES) à écho compensé,

le module non linéaire (36) étant conçu comme un module adaptatif,
**caractérisé par le fait que**
le module non linéaire est conçu pour mettre en oeuvre l'adaptation sur la base du signal résultant (RES) à écho compensé.

3. Dispositif de compensation d'écho selon la revendication 2,

**caractérisé par le fait que**

le dispositif de signal de compensation (30) comporte un filtre adaptatif (34) qui produit un premier signal de compensation (CM1).

4. Dispositif de compensation d'écho selon la revendication 3,

**caractérisé par le fait que**

le dispositif compensateur (32) comporte un premier soustracteur (46) qui soustrait l'un de l'autre le signal d'entrée (IN) de l'appareil de télécommunication et le premier signal de compensation (CM1) du filtre adaptatif (34).

5. Dispositif de compensation d'écho selon la revendication 3 ou 4,

**caractérisé par le fait que**

le filtre adaptatif (34) est conçu pour mettre en oeuvre l'adaptation sur la base du signal résultant (RES) à écho compensé.

6. Dispositif de compensation d'écho selon la revendication 4,

**caractérisé par le fait que**

le filtre adaptatif (34) est conçu pour mettre en oeuvre l'adaptation sur la base d'un signal intermédiaire (IMD) produit par le premier soustracteur (46).

7. Dispositif de compensation d'écho selon l'une des revendications 3 à 6,

**caractérisé par le fait que**

le module non linéaire (36) produit un deuxième signal de compensation (CM2) et le dispositif compensateur (32) est conçu pour soustraire l'un de l'autre le signal d'entrée (IN) de l'appareil de télécommunication d'une part et les deux signaux de compensation (CM1, CM2) d'autre part.

8. Dispositif de compensation d'écho selon l'une des revendications 3 à 5,

**caractérisé par le fait que**

le signal de sortie (OUT) de l'appareil de télécommunication sert de signal d'entrée pour le module non linéaire (36).

9. Dispositif de compensation d'écho selon la revendication 8,

**caractérisé par le fait que**

il est prévu un additionneur (42) qui produit à partir du signal de sortie (OUT) de l'appareil de télécommunication et d'un signal de distorsion (DST) du module non linéaire (36) un signal modifié (MOD) comme signal d'entrée pour le filtre adaptatif (34).

10. Dispositif de compensation d'écho selon l'une des revendications 3 à 7,

**caractérisé par le fait que**

le premier signal de compensation (CM1) du filtre adaptatif (34) sert de signal d'entrée pour le module non linéaire (36).

11. Dispositif de compensation d'écho selon l'une des revendications 3 à 5, 8 ou 10,

**caractérisé par le fait que**

le module non linéaire (36) produit un signal de commande (CTL) pour le filtre adaptatif (34) pour influencer les propriétés de filtrage du filtre adaptatif (34).

12. Dispositif de compensation d'écho selon l'une des revendications 2 à 11,

**caractérisé par le fait que**

une commande (38) est prévue pour activer et désactiver la capacité d'adaptation du filtre adaptatif (34) et du module non linéaire (36) et que la commande (38) traite le signal de sortie (OUT) et le signal d'entrée (IN) de l'appareil de télécommunication.

13. Dispositif de compensation d'écho selon l'une des revendications 2 à 12,

**caractérisé par le fait que**

le dispositif de signal de compensation (30) et le dispositif compensateur (32) sont mis en oeuvre comme des processus d'un programme de commande d'un processeur de signal numérique.

14. Appareil de télécommunication comportant un dispositif de compensation d'écho selon l'une des revendications 2 à 13.

15. Appareil de télécommunication selon la revendication 14, qui est conçu comme un téléphone équipé d'un dispositif mains-libres.

FIG 1

FIG 2

EP 1 020 068 B1

FIG 3

FIG 4

FIG 5

FIG 6